# EUROPEAN PATENT SPECIFICATION

(11) **EP 2 181 377 B1**
(45) Date of publication and mention of the grant of the patent: **17.08.2011**
(21) Application number: 08776386.8
(22) Date of filing: 21.07.2008
(51) Int. Cl.: G05D 23/13

(54) **Storage water heater**
Heisswasserbereiter
Chaudière

(30) Priority: 01.08.2007 IT AN20070041
(43) Date of publication of application: 05.05.2010
(73) Proprietor: ARISTON THERMO S.P.A., 60044 Fabriano (AN) (IT)
(72) Inventor: MANCINI, Angelo, I-60044 Fabriano (Ancona) (IT); SAMPAOLESI, Roberto, I-60044 Fabriano (Ancona) (IT)
(74) Representative: Gentili, Enrico
(86) International application number: PCT/IB2008/001921
(87) International publication number: WO 2009/016452

(56) References cited:
- EP-A- 1 248 173
- WO-A-2005/028930
- FR-A- 2 824 627
- US-A- 6 042 015
- US-A1- 2004 177 817

## Description

The object of the present invention is a storage water heater having a thermostatic mixer.

As is known, the application of thermostatic mixers to the devices for producing hot sanitary water implies a series of considerable advantages.

In fact, thermostatic mixers keep the temperature of the mixed water sent to the users constant, at the value set, as the temperature and the feeding pressure of the incoming hot and cold water changes.

Moreover, thermostatic mixers allow storing water in the water heater even at temperatures above 60°C, thus preventing the proliferation of bacteria and above all, allowing a considerable energy saving avoiding the dispensing of water at temperatures above what required in the distribution network, and thus reducing passive dispersions through said network.

The construction and the operation of a storage water heater having a thermostatic mixer are well known, thus a brief description of said thermostatic mixer in some versions thereof are sufficient herein.

For example, a type of thermostatic mixer is described in patent EP 0 767 332. The thermostatic mixer comprises a mixer body having a first and a second inlet respectively for a flow of cold water and one of hot water, a longitudinal mixing chamber, and means for adjusting said flows axially sliding into said mixing chamber, and an outlet section of mixed water at the desired temperature "set" by the user through manual calibration means. The adjustment means is actively connected to a thermostatic actuator so as to allow the adjustment of the incoming hot and/or cold water flows according to the temperature of the mixed water which invades the thermo-sensitive element, for example a wax bulb, of the actuator itself.

In particular, said adjustment means operates by directly varying the inlet section to the mixer of the mains cold water which is mixed with the hot one coming from the water heater.

Another version of thermostatic mixer, also well known, is instead provided with a shape memory alloy means as thermo-sensitive element of the actuator.

This mixer is therefore characterised by a thermo-sensitive element, the material whereof during the make is plastically deformed during suitable thermal treatments; the result is a shape memory thermo-sensitive element, that is, capable of taking up two different lengths according to whether it is kept below or above predetermined temperatures, retaining such feature over time.

A similar thermostatic mixer is also described in patent WO 2005/028930, where the adjustment means for the flows of cold and hot water is a temperature sensing device, placed substantially inside the body of such a mixer and able to impose an upper limit on the temperature of the mixed water directed to the users.

All said thermostatic mixers, according to the versions briefly described, are mounted outside and right downstream of the water heater, in particular on the hot water outlet duct.

These thermostatic mixers therefore have as a main drawback that of requiring additional and/or by-pass fittings so that the cold water, withdrawn from the inlet duct of the water heater, may be mixed with the hot one.

The thermostatic mixers mounted outside the water heater imply further drawbacks, such as the risk of accidental tampering by the user.

Moreover, while such solution is the most used one, it does not appear to be aesthetically satisfactory.

A first object of the present invention is to provide a water heater having a thermostatic mixer with a simplified and improved construction.

A second object of the present invention is to provide a water heater having a thermostatic mixer suitable for engaging on a single pipe of the water heater.

A further object of the present invention is to provide a water heater having a thermostatic mixer capable of ensuring a considerable energy saving.

Said objects and further advantages are achieved with a water heater having a thermostatic mixer as described below, in some preferred versions thereof, with the aid of the accompanying figures and in the annexed claims, which are an integral part of the description itself.

In particular, the present invention will be described in a non-limiting manner, according to several preferred embodiments relative to an electrical storage water heater.
Figure 1 shows a section of an electrical storage water heater provided with the thermostatic mixer object of the invention.
Figure 2 shows a section of the thermostatic mixer according to the invention.
Figure 3 shows a section of the thermostatic mixer identical to that of figure 2 but showing the path of the water through said thermostatic mixer.
Figure 4 shows the thermostatic mixer mounted on the water heater outlet pipe.

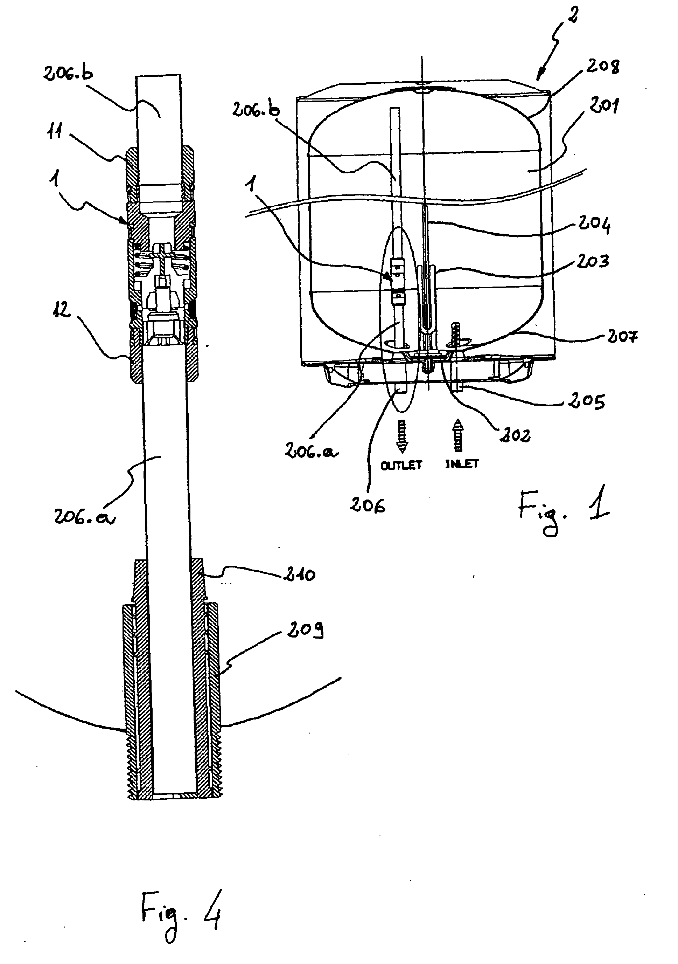

With reference to figures 1 and 4, an electrical storage water heater 2 is shown, comprising a tank 201 and a flange 202 which in turn comprises one or more electrical resistances 203 for water heating and a sheath 204 of the thermostat, containing one or more temperature sensors, not shown in the figure.

The cold water is introduced, through an inlet pipe 205, in the proximity of the bottom cap 207 of tank 201, whereas the hot water, at the maximum temperature, is withdrawn through an outlet pipe 206, in the proximity of the dome 208 of tank 201. The thermostatic mixer 1 is arranged on the hot water outlet pipe 206, as described hereinafter in greater detail.

For simplicity of description, reference numeral 206.a indicates the portion of the hot water outlet pipe 206 substantially comprised between the thermostatic mixer 1 and the bottom cap 207; reference numeral 206.b, on the other hand, indicates the portion of said hot water outlet pipe 206 comprised between the thermostatic mixer 1 and said dome 208.

As clear from figure 1, said thermostatic mixer 1 is mounted inside tank 201 of water heater 2, substantially in the proximity of the bottom cap 207, so as to be externally lapped by the cold water fed by said inlet pipe 205.

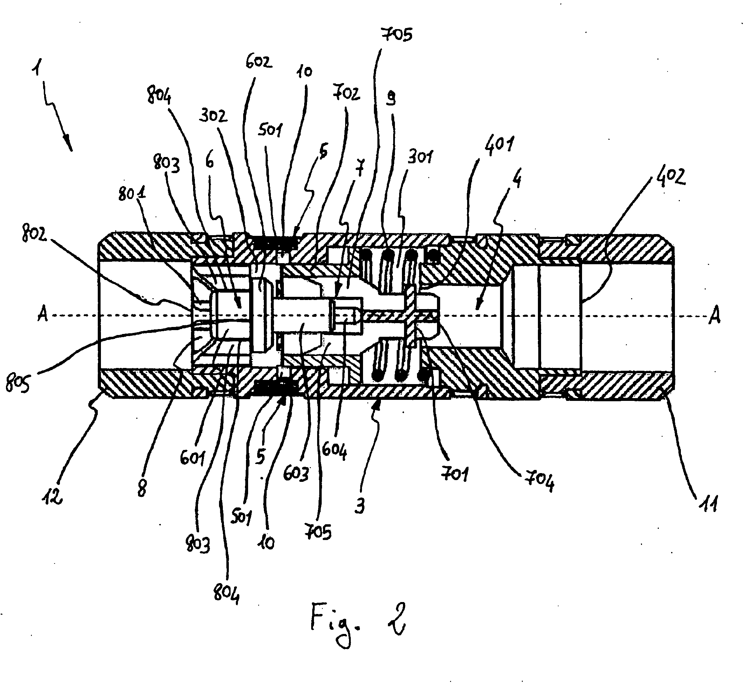

With reference to figure 2, 3 and 4, said thermostatic mixer 1 is shown according to a preferred embodiment.

Said thermostatic mixer 1 substantially comprises a mixer body 3, with longitudinal axis A-A, a first inlet 4 for feeding hot water, coaxial to said mixer body 3, a second inlet 5 for feeding cold water, a thermostatic actuator 6 and a box 7 for adjusting the flow rates of cold and hot water to be mixed.

Reference numeral 8 indicates the outlet of the mixed water to the users.

More in particular, reference numeral 401 indicates the passage section of hot water from said inlet 4 to a chamber 301 of the mixer body 3, and hereinafter therefore referred to as hot chamber.

Reference numeral 501, on the other hand, indicates the passage section of cold water from said inlet 5 to a mixing chamber 302 of the mixer body 3.

The hot water is thus mixed with cold one in said mixing chamber 302.

The passage section 501 of inlet 5 of the cold water is obtained through circumferential slots 501.

Said circumferential slots 501 are obtained on the side surface of the mixer body 3, at the mixing chamber 302.

The cold water thus enters into said mixing chamber 302 according to directions substantially orthogonal to axis A-A of the mixer body 3.

With reference to the thermostatic actuator 6, reference numeral 601 indicates a thermo-sensitive element, preferably a wax expansion bulb, of the well known type normally used in thermostatic mixers.

However as an alternative, nothing prevents said thermo-sensitive element 601 from being any other heat expansible fluid or said thermostatic actuator 6 from being of a type based on shape memory elements.

The thermo-sensitive element 601 is arranged at the mixing chamber 302 so as to be lapped by the mixed water.

Said thermo-sensitive element 601 is then stiffly connected to a stop 602.

Said stop 602 is further constrained to a dilatation element like a bellows 603 which, in known manner and as will be explained hereinafter, undergoes axial movements according to the temperature the thermo-sensitive element 601 is subject to, that is, the temperature of the mixed water sent to outlet 8.

Said thermo-sensitive element 601 is centred between ends 804 of ribs 803 at the edges whereof there are defined channels 801 that allow the passage of the mixed water.

Stop 602 on the other hand rests on the top edge 805 of said ribs 803.

End 604 of the bellows 603, opposite the thermo-sensitive element 601, as per prior art, pushes on a box 7 for the adjustment of hot and cold water flow rates opposed by an abutment spring 9.

Said box 7 therefore is capable of shifting relative to the hot chamber 301 under the action of said thermo-sensitive element 601.

In particular, said box 7 comprises a first shutter 701, hereinafter referred to as hot shutter, and a second shutter 702, hereinafter referred to as cold shutter, constrained to one another by a central core 704 and ribs 705 that extend radially, and lapping them the hot water can move from the hot chamber 301 to the mixing one 302.

As will be described in more detail hereinafter, said hot 701 and cold 702 shutters are such as to vary, according to the axial thrust of said bellows 603, respectively the passage section 401 of the hot water towards the hot chamber 301 and the passage section 501 of the cold water towards the mixing chamber 302.

Reference numeral 9 further indicates the contrast spring for the same adjustment box 7.

A filter 10 may be inserted on said circumferential slots 501.

Said filter 10 prevents scale deposits from obstructing said slots 501 preventing the crossing thereof by cold water.

It is now possible to proceed with a more detailed description of the water heater 2 having the thermostatic mixer 1 according to the invention.

As already partly mentioned, the hot water coming from portion 206.b of the outlet pipe 206 of the water heater 2 axially enters through the passage section 401 into the mixing chamber 301 and hence it goes into the mixing chamber 302, where it is mixed with the incoming cold water through the circumferential slots 501.

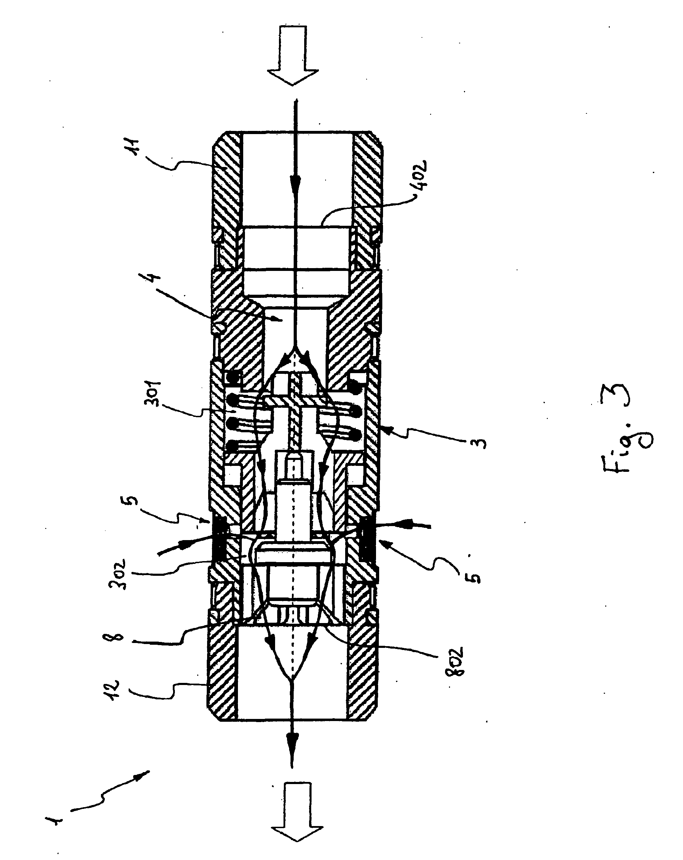

The mixed water then moves through channels 801, from the mixing chamber 302 to outlet 8 of the thermostatic mixer 1 to be delivered to the user at the desired temperature (in particular, see the arrows in figure 3).

The temperature of the mixed water thus obtained affects the expansion of the thermo-sensitive element 601 so as to change the passage sections 401 and 501, respectively for the inlet of hot and cold water into the thermostatic mixer 1.

By way of an example only, in fact, if the temperature of the mixed water that externally laps said thermo-sensitive element 601 of the thermostatic actuator 6, is higher than the value required by the user, the wax of said thermo-sensitive element 601 will expand, with consequent expansion and movement of bellows 603 such as to cause an axial shifting of box 7.

Said shifting of box 7 takes place in opposite direction to the outlet direction of the mixed water in opposition to the pressure exerted by the abutment spring 9.

In this way, the passage section 401 of the hot water is decreased through the shifting of the hot shutter 701, whereas the passage section 501 of the cold water is increased by the shifting of said cold shutter 702.

On the contrary, a temperature of the mixed water below the desired value will correspond to a shrinkage of the wax of the thermo-sensitive element 601 with consequent shifting of box 7 suitable for decreasing the passage section 501 of the cold water and increasing that 401 of the hot water.

In any case, a balance condition is automatically restored, wherein the temperature of the mixed water directed to the users actually is that desired.

It is therefore clear that the constancy, at the desired value, of the temperature of the mixed water, is expressly a function of the chemical-physical properties of the thermo-sensitive element 601, in particular of the expansion coefficient of the wax contained therein, besides the geometry of box 7 (and relative hot and cold shutters 701 and 702).

In the design and/or construction phase, the choice of the thermo-sensitive element 601 and of the geometry of said box 7 thus allows having models of thermostatic mixers 1 made for different temperature ranges (of the mixed water) according to the requirements of the various markets, having multiple different models of sensitive elements 601 and/or suitably changing the geometry of shutters 701 and 702 (in order to change the passage sections 401 and 501 respectively of the hot and cold water).

While the storage water heater 2 having the thermostatic mixer 1 as described so far has an operating principle according to the prior art, it exhibits the certain advantage of avoiding additional fittings and/or by-pass pipes for feeding the cold water to be mixed, since the thermostatic mixer 1 itself is immersed in the cold water (into tank 201 of water heater 2) it receives through said circumferential slots 501 of inlet 5. Normally in known water heater having the thermostatic mixers mounted outside its tank, the adjustment of temperature of the mixed water takes place by operating a knob that substantially acts, through a screw-nut screw coupling, on the shutter allowing the modification of one or both passage sections of the hot and/or cold water.

As a consequence, in general, no initial calibration procedure and/or device is required during the construction or inspection steps of the thermostatic mixer itself at the factory.

For the purposes of this patent, the thermostatic mixer 1 inside the water heater 2, as described, does not require an initial calibration either as the desired temperature of the mixed water is obtainable by construction, as said above (selection of the sensitive element 601 and/or of the geometry of shutters 701 and 702).

However, while it is not shown, an initial fine calibration may be provided in said thermostatic mixer 1.

A first solution may consist in making the inlet 4 for feeding hot water free to shift relative to the mixer body 3 through a screw-nut screw coupling, not shown.

In this way, rotating inlet 4 relative to said mixer body 3, a corresponding variation of the hot water passage section 401 takes place, other conditions being equal.

As an alternative it is possible to provide for bellows 603 of the thermostatic actuator 6, rather than acting on end 703 of the hot shutter 701, to press directly on an adjustment screw, not shown, in turn screwed to core 704 of said hot shutter 701 and coaxial thereto.

In this way, a shifting of box 7 is obtained by screwing said screw which moves it away from the tip of bellows 603, with the consequent reduction of the passage section 401 of the hot water and increase of the passage section 501 of the cold water (and/or vice versa).

As already said before and with particular reference to figures 1 and 4, the thermostatic mixer 1 is mounted inside the water heater 2 on the hot water outlet pipe 206.

Reference numerals 11 and 12 indicate the means for fixing the thermostatic mixer 1 to said hot water outlet pipe 206.

More precisely, reference numeral 11 indicates the means for fixing portion 206.b of the outlet pipe 206 to orifice 402 of the hot water inlet 4.

Reference numeral 12, on the other hand, indicates the means for fixing portion 206.a of the outlet pipe 206 to orifice 802 of the mixed water outlet 8.

According to a preferred embodiment of the invention, since said portions of pipe 206.a and 206.b are not subject to any mechanical strain except for that due to their weight, said fixing means 11 and/or 12 may consist in a quick snap-wise coupling of any known shape.

However, nothing prevents the possibility of using known and equivalent means for coupling said orifices 402 and 802 to the hot water outlet pipe 206, such as for example threads, unions, bayonet couplings, fixed seaming, or internal caulking. Once fixed as described at portions 206.a and 206.b of said hot water outlet pipe 206, the thermostatic mixer 1 is inserted into tank 201 of water heater 2 from the bottom through the threaded sleeve 209 welded to tank 201 itself.

In fact, it is clear that it may be constructed with an inside diameter at least so reduced as to be made to pass into a ¾" diameter pipe.

The hot water outlet pipe 206 is thus fixed and locked relative to tank 201 of the water heater by the insulating sleeve 210 of plastic material, which couples by interference with said threaded sleeve 209 (in particular, see fig. 3).

At the same time, said insulating sleeve 210 of plastic material also ensures seal and electrical insulation.

This type of coupling between the metal sleeve 209 welded to tank 201 and the insulating sleeve 210, in any case, is already commonly and widely used.

However, nothing prevents from proceeding with the insertion of the thermostatic mixer 1 into tank 201 of water heater 2 according to alternative methods.

For example it is possible to:
- insert a first portion 206.a of the hot water outlet pipe 206 from the outside into tank 201 of water heater 2 through the threaded sleeve 209 welded thereto, said first portion 206.a being then fixed by interference through the insulating sleeve 210 of plastic material,
- fix a second portion 206.b of the outlet pipe 206 to orifice 402 of the hot water inlet 4 of the thermostatic mixer 1,
- manually insert the thermostatic mixer 1 into tank 201 through the hole of water heater 2, then closed by flange 202,
- proceed with fixing orifice 802 of outlet 8 of the mixed water of the thermostatic mixer 1 to said first portion 206.a of the outlet pipe 206.

## Claims

1. A storage water heater (2) comprising at least:
- a storage tank (201),
- an inlet pipe (205) of cold water from the mains,
**characterised in that** it comprises:
- an outlet pipe (206) having two portions (206.a, 206.b), the first portion (206.a) for the hot mixed water to the users and ending with a threaded sleeve (209), the second portion (206.b) for withdrawing the hot water at the maximum temperature in the proximity of the dome (208) of said tank (201),
- a thermostatic mixer (1) for mixing the cold water coming from the mains and the hot water taken at the maximum temperature of said water (2) in the proximity of the dome (208) of said tank (201), the thermostatic mixer (1) being arranged inside the tank (201) of said storage water heater (2) and in proximity of the bottom cap (207) of said tank (201),
said thermostatic mixer (1) comprising at least:
- a first inlet (4) connected to said second portion (206.b) of said outlet pipe (206) for collecting said hot water at the maximum temperature,
- a second inlet (5) for collecting cold water,
- a mixer body (3) receiving said hot water from said first inlet (4) and receiving the cold water from said second inlet (5),
- an outlet (8) connected to said first portion (206.b) of said outlet pipe (206) for providing mixed water to the users,
whereas said second inlet (5) is lapped and fed by the cold water coming from said inlet pipe (205).

2. Storage water heater (2) according to the claim 1,
**characterised in that**
said mixer body (3) comprises:
- a mixing chamber (302) suitable for mixing the hot water coming from said first inlet (4) with the cold water coming from said second inlet (5),
- a thermostatic actuator (6) that acts on a box (7) for adjusting the flow rates of hot and cold water to be mixed, said adjustment box (7) comprising a hot shutter (701) and a cold shutter (702), said hot and cold shutters (701, 702) being capable of respectively changing the passage section (401) of the inlet (4) for feeding hot water and the passage section (501) of the inlet (5) for feeding cold water.

3. Storage water heater (2) according to the claim 2,
**characterised in that**
said thermostatic actuator (6) comprises a thermo-sensitive element (601) arranged in said mixing chamber (302), said thermo-sensitive element (601) being externally lapped by the mixer water contained in said mixing chamber (302) and being suitable to transmit an axial movement to a stop (602) and to a bellows (603), constrained thereto, according to the temperature of said mixed water.

4. Storage water heater (2) according to any previous claim,
**characterised in that**
the cold water enters into said mixing chamber (302) according to directions substantially orthogonal to axis A-A of said mixer body (3), said cold water mixing with the hot water coming from the hot chamber (301).

5. Storage water heater (2) according to any previous claim,
**characterised in that**
- the thermo-sensitive element (601) of the thermostatic actuator (6) is centred between the ends (804) of ribs (803) at the edges whereof there are defined channels (801) that allow the passage of the mixed water,
- the stop (602) of the thermostatic actuator (6) rests on the top edge (805) of said ribs (803).

6. Storage water heater (2) according to any previous claim,
**characterised in that**
the end (604) of said bellows (603) acts on the box (7) for adjusting the flow rates of hot and cold water, said adjustment box (7) thus being capable of axially shifting relative to the hot chamber (301) wherein it is seated.

7. Storage water heater (2) according to any previous claim,
**characterised in that**
the inlet (5) for feeding cold water is provided with a passage section (501) for the inlet of cold water wherein said thermostatic mixer (1) is immersed, said passage section consisting in circumferential slots (501) obtained on the side surface of the mixer body (3), at the mixing chamber (302).

8. Storage water heater (2) according to the previous claim 7,
**characterised in that**
a filter (10) is arranged on said circumferential slots (501) suitable for preventing scale deposits from obstructing the water passage towards the mixing chamber (302).

9. Storage water heater (2) according to any previous claim,
**characterised in that**
it is provided with initial fine calibration means, consisting in a screw-nut screw coupling that makes the hot water feeding inlet (4) free to shift relative to the mixer body (3), said screw-nut screw coupling allowing the variation of the passage section (401) of said inlet (4).

10. Storage water heater (2) according to claim 9,
**characterised in that**
said initial fine calibration means consist in an adjustment screw screwed to the core (704) of the hot shutter (701), coaxial thereto, on the tip whereof the end (604) of the bellows (603) of the thermostatic actuator (6) pushes, said adjustment screw allowing, through screwing, the shifting of the adjustment box (7) relative to said bellows (603) with the consequent variation of the passage sections (401, 501) respectively of the hot and cold water.

## Patentansprüche

1. Ein Warmwasserspeicher (2) mit mindestens:
- einem Speichertank (201),
- einem Zuleitungsrohr (205) für kaltes Wasser vom Wassernetz,
der **dadurch gekennzeichnet ist, dass** er Folgendes umfasst:
- ein Auslaufrohr (206) mit zwei Abschnitten (206.a, 206.b), wobei der erste Abschnitt (206.a) für das heiße Mischwasser vorgesehen ist, das an die Verbraucher geht, und mit einer Gewindehülse (209) endet, und der zweite Abschnitt (206.b) für die Entnahme des heißen Wassers bei der maximale Temperatur in der Nähe der Wölbung (208) des besagten Tanks (201) bestimmt ist,
- einen thermostatischen Mischer (1) zum Mischen des kalten Wassers aus dem Wassernetz und des heißen Wassers, das bei der maximalen Temperatur des besagten Warmwasserspeichers (2) in der Nähe der Wölbung (208) des Tanks (201) entnommen worden ist, wobei der thermostatische Mischer (1) im Inneren des Tanks (201) des besagten Warmwasserspeichers (2) und in der Nähe der Bodenkappe (207) des besagten Tanks (201) untergebracht wird,
wobei der besagte thermostatische Mischer (1) mindestens aus Folgendem besteht:
- einem ersten Einlass (4), der mit dem besagten zweiten Abschnitt (206.b) des Auslaufrohrs (206) zum Sammeln des Warmwassers bei der maximalen Temperatur verbunden ist,
- einem zweiten Einlass (5) für das Sammeln des kalten Wassers,
- einem Mischkörper (3), der das besagte heiße Wasser aus dem ersten Einlass (4) und das kalte Wasser aus dem zweiten Einlass (5) empfängt,
- einem Abfluss (8), der mit dem ersten Abschnitt (206.a) des besagten Auslaufrohrs (206) für die Bereitstellung des Mischwassers, das an die Verbraucher geht, verbunden ist,
während der zweite Einlass (5) von dem kalten Wasser aus dem besagten Zuleitungsrohr (205) umspült und gespeist wird.

2. Warmwasserspeicher (2) nach dem Anspruch 1,
der **dadurch gekennzeichnet ist, dass**
der besagte Mischkörper (3) Folgendes umfasst:
- eine Mischkammer (302), die für das Mischen des heißen Wassers, das aus dem ersten Einlass (4) kommt, mit dem kalten Wasser, das aus dem zweiten Einlass (5) kommt, geeignet ist,
- einen thermostatischen Stellantrieb (6), der auf ein Gehäuse (7) zur Einstellung der Volumenströme des heißen und kalten Wassers, das gemischt werden soll, einwirkt, wobei das besagte Einstellungsgehäuse (7) mit einer Heißwasser-Klappe (701) und einer Kaltwasser-Klappe (702) ausgestattet ist, wobei die besagten Heiß- und Kaltwasser-Klappen (701, 702) in der Lage sind jeweils den Durchflussabschnitt (401) des Einlasses (4) zum Zuführen von heißem Wasser und den Durchflussabschnitt (501) des Einlasses (5) zum Zuführen von kaltem Wasser zu ändern.

3. Warmwasserspeicher (2) nach dem Anspruch 2,
der **dadurch gekennzeichnet ist, dass**
der besagte thermostatische Stellantrieb (6) aus einem wärmeempfindlichen Element (601) besteht, das in der Mischkammer (302) untergebracht ist, wobei das besagte wärmeempfindliche Element (601) äußerlich von dem Mischwasser umspült wird, das in der besagten Mischkammer (302) enthalten ist, und geeignet ist, eine axiale Bewegung zu einem Anschlag (602) und zu einem Faltenbalg (603) zu übertragen, wozu es gemäß der Temperatur des besagten Mischwassers gezwungen wird.

4. Warmwasserspeicher (2) nach einem vorhergehenden Anspruch,
der **dadurch gekennzeichnet ist, dass**
das kalte Wasser im Wesentlichen orthogonal zur Achse AA des besagten Mischkörpers (3) in die besagte Mischkammer (302) eintritt, wobei das besagte Kaltwasser mit dem Heißwasser, das aus der Heißwasserkammer (301) kommt, vermischt wird.

5. Warmwasserspeicher (2) nach einem vorhergehenden Anspruch,
der **dadurch gekennzeichnet ist, dass**
- das wärmeempfindliche Element (601) des thermostatischen Stellantriebs (6) in der Mitte zwischen den Enden (804) von Rippen (803) untergebracht ist, an deren Rändern sich Kanäle (801) befinden, die den Durchfluss des Mischwassers erlauben,
- der Anschlag (602) des thermostatischen Stellantriebs (6) auf der Oberkante (805) der besagten Rippen (803) liegt.

6. Warmwasserspeicher (2) nach einem vorhergehenden Anspruch,
der **dadurch gekennzeichnet ist, dass**
das Ende (604) von dem besagten Faltenbalg (603) auf ein Gehäuse (7) zur Einstellung der Volumenströme des heißen und kalten Wassers, einwirkt, wobei das besagte Einstellungsgehäuse (7) in der Lage ist, sich axial gegenüber der Heißwasserkammer (301) zu verschieben, worin es untergebracht ist.

7. Warmwasserspeicher (2) nach einem vorhergehenden Anspruch,
der **dadurch gekennzeichnet ist, dass**
der Einlass (5) zur Zufuhr von kaltem Wasser mit einem Durchflussabschnitt (501) für den Einlass von kaltem Wasser versehen ist, wobei der besagte thermostatische Mischer (1) eingetaucht ist, wobei der besagte Durchflussabschnitt aus Ringnuten (501) besteht, die auf der Seitenfläche des Mischkörpers (3) bei der Mischkammer (302) erhalten worden sind.

8. Warmwasserspeicher (2) nach dem vorhergehenden Anspruch 7,
der **dadurch gekennzeichnet ist, dass**
ein Filter (10) auf den besagten Ringnuten (501) angebracht ist, der geeignet ist, zu verhindern, dass Kalkablagerungen den Wasserdurchfluss zur Mischkammer (302) blockieren.

9. Warmwasserspeicher (2) nach einem vorhergehenden Anspruch,
der **dadurch gekennzeichnet ist, dass**
er mit am Anfang befindlichen Mitteln zur Feinkalibrierung ausgestattet ist, die aus einer Schraubenmutter-Schraubenverkupplung bestehen, die bewirken, dass sich der Einlass für die Zufuhr des heißen Wassers (4) frei gegenüber dem Mischkörper (3) verschieben kann, wobei die Schraubenmutter-Schraubenverkupplung die Änderung des Durchflussabschnitts (401) des besagten Einlasses (4) ermöglicht.

10. Warmwasserspeicher (2) nach Anspruch 9,
der **dadurch gekennzeichnet ist, dass**
die besagten anfänglichen Mittel zur Feinkalibrierung aus einer Einstellschraube bestehen, die an dem Kern (704) der Heißwasser-Klappe (701) befestigt ist, und zwar koaxial dazu, an deren Spitze das Ende (604) von dem Faltenbalg (603) des thermostatischen Stellantriebs (6), falls es die besagte Einstellschraube ermöglicht, die Verschiebung des Einstellungsgehäuses (7) gegenüber dem Faltenbalg (603) mit der daraus folgenden Änderung der jeweiligen Durchflussabschnitte (401, 501) des Warm- und Kaltwassers vorantreibt.

## Revendications

1. Un chauffe-eau de stockage (2) comprenant au moins:
- un réservoir de stockage (201),
- un tuyau d'entrée (205) d'eau froide du réseau,
**caractérisé en ce qu'**il comprend :
- un tuyau de sortie (206) présentant deux parties (206.a, 206.b), la première partie (206.a) pour l'eau chaude mitigée pour les utilisateurs et se terminant par un manchon fileté (209), la deuxième partie (206.b) pour le retrait de l'eau chaude à la température maximale à proximité de la calotte (208) dudit réservoir (201),
- un mitigeur thermostatique (1) pour mitiger l'eau froide provenant du réseau et l'eau chaude prise à la température maximale dudit chauffe-eau (2) à proximité de la calotte (208) dudit réservoir (201), le mitigeur thermostatique (1) étant disposé à l'intérieur du réservoir (201) dudit chauffe-eau de stockage (2) et à proximité de la calotte inférieure (207) dudit réservoir (201),
ledit mitigeur thermostatique (1) comprenant au moins:
- une première entrée (4) reliée à ladite seconde partie (206.b) dudit tuyau de sortie (206) pour la collecte de ladite eau chaude à la température maximale,
- une deuxième entrée (5) pour collecter l'eau froide,
- un corps mitigeur (3) recevant ladite eau chaude à partir de ladite première entrée (4) et recevant l'eau froide à partir de ladite deuxième entrée (5),
- une sortie (8) reliée à ladite première partie (206.a) dudit tuyau de sortie (206) pour fournir de l'eau mitigée aux utilisateurs,
tandis que ladite deuxième entrée (5) est rodée et alimentée par l'eau froide provenant dudit tuyau d'entrée (205).

2. Chauffe-eau de stockage (2) selon la revendication 1,
**caractérisé en ce que**
ledit corps mitigeur (3) comprend :
- une chambre de mélange (302) adaptée pour mitiger l'eau chaude provenant de ladite première entrée (4) avec l'eau froide provenant de ladite deuxième entrée (5),
- un actionneur thermostatique (6) qui agit sur un boîtier (7) pour régler le débit d'eau chaude et froide qui doivent être mitigées, ledit boîtier de réglage (7) comprenant un obturateur chaud (701) et un obturateur froid (702), lesdits obturateurs chauds et froids (701, 702) étant capable de changer respectivement la section de passage (401) de l'entrée (4) pour l'alimentation en eau chaude et la section de passage (501) de l'entrée (5) pour l'alimentation d'eau froide.

3. Chauffe-eau de stockage (2) selon la revendication 2,
**caractérisé en ce que**
ledit actionneur thermostatiques (6) comprend un élément thermosensible (601) disposé dans ladite chambre de mélange (302), ledit élément thermosensible (601) étant à l'extérieur baigné par le mitigeur d'eau contenu dans ladite chambre de mélange (302) et étant apte de transmettre un mouvement axial à un arrêt (602) et à un soufflet (603), ce dernier contraint, selon la température de ladite eau mitigée.

4. Chauffe-eau de stockage (2) selon les revendications précédentes,
**caractérisé en ce que**
l'eau froide pénètre dans ladite chambre de mélange (302) selon des directions sensiblement orthogonales à l'axe A-A dudit corps mitigeur (3), ledit mitigeur d'eau froide est mitigée avec l'eau chaude provenant de la chambre chaude (301).

5. Chauffe-eau de stockage (2) selon les revendications précédentes,
**caractérisé en ce que**
- l'élément thermosensible (601) de l'actionneur thermostatique (6) est centré entre les extrémités (804) de côtes (803) sur les bords de quoi, il y a des canaux définis (801) qui permettent le passage de l'eau mitigée,
- l'arrêt (602) de l'actionneur thermostatique (6) repose sur le bord supérieur (805) desdites côtes (803).

6. Chauffe-eau de stockage (2) selon les revendications précédentes,
**caractérisé en ce que**
l'extrémité (604) desdits soufflets (603) agit sur le boîtier (7) pour régler le débit d'eau chaude et froide, ledit boîtier de réglage (7) étant donc capable de se déplacer axialement par rapport à la chambre chaude (301) dans lequel il est colloqué.

7. Chauffe-eau de stockage (2) selon les revendications précédentes,
**caractérisé en ce que**
l'entrée (5) d'alimentation en eau froide est fournie avec une section de passage (501) pour l'entrée de l'eau froide dans laquelle ledit mitigeur thermostatique (1) est immergé, ladite section de passage consiste en des fentes circonférentielles (501) obtenues sur la surface latérale du corps mitigeur (3), à la chambre de mélange (302).

8. Chauffe-eau de stockage (2) selon les revendications précédentes,
**caractérisé en ce que**
un filtre (10) est disposé sur lesdites fentes circonférentielles (501) adapté à la prévention des dépôts de calcaire pouvant obstruer le passage de l'eau vers la chambre de mélange (302).

9. Chauffe-eau de stockage (2) selon les revendications précédentes,
**caractérisé en ce que**
il est fourni avec des moyens de calibrage initiaux fins, consistant en un accouplement à vis-écrou qui permet l'entrée d'alimentation d'eau chaude (4) libre de se déplacer par rapport au corps mitigeur (3), ledit couplage à vis-écrou permettant la variation de la section de passage (401) de ladite entrée (4).

10. Chauffe-eau de stockage (2) selon les revendications précédentes,
**caractérisé en ce que**
lesdits moyens de calibrage initiaux fins consistent en une vis de réglage vissée au centre (704) de l'obturateur chaud (701), y coaxial, sur la pointe dont l'extrémité, (604) du soufflet (603) de l'actionneur thermostatique (6) pousse, ladite vis de réglage permettant, par vissage, le déplacement du boîtier de réglage (7) par rapport auxdits soufflets (603) avec la conséquente variation des sections de passage (401, 501), respectivement de l'eau chaude et froide.
